# EUROPÄISCHE PATENTANMELDUNG

(11) **EP 3 705 965 A1**
(43) Veröffentlichungstag der Anmeldung: **09.09.2020**
(21) Anmeldenummer: 19160581.5
(22) Anmeldetag: 04.03.2019
(51) Int. Cl.: G05B 23/02

(54) **BILDBASIERTE SYSTEMÜBERWACHUNG**

(71) Anmelder: Siemens Aktiengesellschaft, 80333 München (DE)
(72) Erfinder: Blöcher, Uwe, 82178 Puchheim (DE); Falk, Rainer, 85586 Poing (DE); Feist, Christian Peter, 80689 München (DE); Pfau, Axel, 80333 München (DE); Sperl, Franz, 92526 Oberviechtach (DE); Trummer, Georg, 92224 Amberg (DE)

(57) **Zusammenfassung**

Die Erfindung betrifft ein Verfahren zur Überwachung der Integrität eines cyber-physischen Systems (1), bei dem
- für wenigstens eine Komponente (2, 4, 6) des cyber-physischen Systems (1), die im laufenden Betrieb Bewegungen absolviert, mittels wenigstens eines bildgebendes Verfahrens Bilddaten erfasst werden (S4),
- unter Rückgriff auf die erfassten Bilddaten Betriebsdaten (14) des cyber-physischen Systems (1) geschätzt werden (S5), wobei die geschätzten Betriebsdaten (14) insbesondere geschätzte Prozessdaten und/oder geschätzte Konfigurationsdaten und/oder geschätzte Fertigungsdaten umfassen,
- tatsächliche Betriebsdaten (15) des cyber-physischen Systems (1), die insbesondere tatsächliche Prozessdaten und/oder tatsächliche Konfigurationsdaten und/oder tatsächliche Fertigungsdaten umfassen, bereitgestellt und/oder ermittelt werden (S6),
- die unter Rückgriff auf die Bilddaten geschätzten Betriebsdaten (14) und die tatsächlichen Betriebsdaten (15) verglichen werden (S7), und
- basierend auf dem Vergleich die Integrität des zu überwachenden cyber-physischen Systems beurteilt wird.

Darüber hinaus betrifft die Erfindung ein Verfahren zum Anlernen einer künstlichen Intelligenz, eine angelernte künstliche Intelligenz, ein Integritätsüberwachungs-System (7), ein Computerprogramm und ein computerlesbares Medium.

## Beschreibung

Die Erfindung betrifft ein Verfahren zur Überwachung der Integrität eines insbesondere industriellen cyber-physischen Systems. Darüber hinaus betrifft die Erfindung ein Verfahren zum Anlernen einer künstlichen Intelligenz, eine angelernte künstliche Intelligenz, ein Integritätsüberwachungs-System, ein Computerprogramm und ein computerlesbares Medium.

Mit zunehmender Automatisierung erfolgt eine zunehmende Verbreitung von industriellen Steuerungs- und Automatisierungssystemen. Solche Systeme, die teilweise auch als cyber-physisches System (CPS) bezeichnet werden, kommen zum Beispiel bei der Fertigung von Maschinen oder Werkstücken zum Einsatz. Steuerungs- bzw. Automatisierungssysteme können prozesstechnische Anlagen implementieren. Industrielle Steuerungs- bzw. Automatisierungssysteme werden auch im Bereich Verkehrsüberwachung oder Verkehrssteuerung eingesetzt, beispielsweise im Zusammenhang mit Verkehrsleitsystemen in Städten, in der Gebäudeautomatisierung, beim Bahnverkehr oder im Flugverkehr. Sie können auch bei der Energieerzeugung, zum Beispiel in Kraftwerken oder Umspannwerken, sowie bei der Energieübertragung und Energieverteilung (Smart Grid) Verwendung finden.

Die Integrität von Systemen (englisch: Device Integrity, System Integrity), insbesondere von industriellen Steuerungs- bzw. Automatisierungssystemen und von deren Steuerungs- und Automatisierungsgeräten ist ein wichtiges Schutzziel. Es wird teilweise sogar als das wichtigste Schutzziel in industriellen Automatisierungs- und Steuerungssystemen betrachtet. Durch den Schutz der Integrität wird erreicht, dass ein System tatsächlich die erwartete Funktionalität realisiert.

Dazu werden Angriffe auf eine Maschine bzw. ein Automatisierungssystem, die diese manipulieren könnten (z.B. Firmware, Konfigurationsdaten, physikalische Manipulation), verhindert (Prevent).

Neben der Angriffs- bzw. Manipulationsvermeidung ist es auch sehr wichtig, eine eventuell trotz vorhandener Sicherheitsmaßnahmen erfolgte Manipulation erkennen zu können. Dazu dient eine Integritätsüberwachung einer Maschine beziehungsweise eines Automatisierungssystems zur Laufzeit. Hierfür werden Integritätsüberwachungsdaten im laufenden Betrieb erfasst und anhand von Integritäts-Referenzdaten überprüft.

Aus dem allgemeinen IT-Bereich sind sogenannte Intrusion Detection Systeme (IDS) bekannt, mittels derer Angriffe auf IT-Systeme erkannt werden können. Es kann sich sowohl um Hostbasierte als auch Netzwerk-basierte Intrusion Detection Systeme handeln. Dabei werden Informationen eines IT-Systems überwacht. Die Ausprägung solcher Systeme ist nach dem Kenntnisstand der Anmelderin meist Regel-basiert. Aus dem Artikel "Application of Neural Networks to Intrusion Detection" von Jean-Philippe Planquart, SANS Institute 2001, https://www.sans.org/readingroom/whitepapers/detection/applicationneural-networksintrusion-detection-336 sind jedoch auch Ansätze unter Verwendung von Methoden des maschinellen Lernens bekannt.

Aus der US 2016/0234241 A1 gehen ein Risiko-Management-Verfahren und -System hervor. Offenbart ist, dass mit einem industriellen Prozess-Steuerungs- und Automatisierungssystem assoziierte Risikodaten gesammelt und analysiert werden, um potentielle Sicherheitsprobleme zu finden.

Die US 2016/0234243 A1 offenbart ein Risiko-Management-System und ein Verfahren, bei dem eine Infrastruktur-Überwachungs-Software verwendet wird, um Cyber-Security-Risikodaten von Geräten eines industriellen Automatisierungssystem zu sammeln.

Aus der ebenfalls auf die Anmelderin zurückgehenden EP 3 428 756 A1 gehen ein Verfahren und ein System zur Integritätsüberwachung eines Automatisierungssystems hervor. Dabei wird ein Vergleich von Zustandsdaten des Automatisierungssystems und Sensordaten, welche eine Umweltbeeinflussung des Automatisierungssystems beschreiben, durchgeführt und auf Basis des Vergleichs die Integrität überwacht, um Beeinträchtigungen dieser aufgrund von Fremdzugriffen festzustellen. Dabei können je nach Art der Umweltbeeinflussung unterschiedlichste Sensoren zum Einsatz kommen. Beispielsweise kann die Umweltbeeinflussung eine Erwärmung oder Abkühlung der Umgebung des Automatisierungssystems umfassen. In einem solchen Fall ist es möglich, dass Temperatursensoren verwendet werden. In anderen Beispielen kann die Umweltbeeinflussung das Schalten von Ampeln oder Verkehrsführungssystemen umfassen. Dann können Videodaten, welche die Verkehrsführungssysteme abbilden, als Sensordaten erhalten werden. Im Zusammenhang mit der Energieerzeugung können beispielsweise auch Sensordaten erhalten werden, die indikativ für elektrische Kenngrößen sind, etwa Spannung oder Stromfluss oder Phasenverschiebung.

Es ist auch bekannt, neuronale Netze zur Analyse von Bildern und Videos zu verwenden. Rein beispielhaft sei in diesem Zusammenhang auf die ebenfalls auf die Anmelderin zurückgehende EP 0 469 315 A2 verwiesen, die ein Verfahren zur visuellen Inspektion zwei- oder dreidimensionaler Bilder unter Verwendung neuronaler Netze offenbart.

Es besteht der Bedarf an einem verbesserten Schutz der Integrität von cyber-physischen Systemen.

Ausgehend davon ist es eine Aufgabe der vorliegenden Erfindung, ein Verfahren zur Überwachung der Integrität eines insbesondere industriellen cyber-physischen Systems, etwa eines Automatisierungssystems, anzugeben, das ein besonders hohes Maß an Schutz bietet und sich gleichzeitig mit vertretbarem Aufwand durchführen lässt. Darüber hinaus ist es eine Aufgabe der vorliegenden Erfindung, ein System zur Durchführung eines solchen Verfahrens anzugeben.

Die erstgenannte Aufgabe wird gelöst durch ein Verfahren zur Überwachung der Integrität eines insbesondere industriellen cyber-physischen Systems, bei dem
- für wenigstens eine Komponente des cyber-physischen Systems, die im laufenden Betrieb Bewegungen absolviert, mittels wenigstens eines bildgebenden Verfahrens Bilddaten erfasst werden,
- unter Rückgriff auf die erfassten Bilddaten Betriebsdaten des cyber-physischen Systems geschätzt werden, wobei die geschätzten Betriebsdaten insbesondere geschätzte Prozessdaten und/oder geschätzte Konfigurationsdaten und/oder geschätzte Fertigungsdaten umfassen,
- tatsächliche Betriebsdaten des cyber-physischen Systems, die insbesondere tatsächliche Prozessdaten und/oder tatsächliche Konfigurationsdaten und/oder tatsächliche Fertigungsdaten umfassen, bereitgestellt und/oder ermittelt werden,
- die unter Rückgriff auf die Bilddaten geschätzten Betriebsdaten und die tatsächlichen Betriebsdaten verglichen werden, und
- basierend auf dem Vergleich die Integrität des zu überwachenden cyber-physischen Systems beurteilt wird.

Die zweitgenannte Aufgabe wird gelöst durch ein Integritätsüberwachungs-System zur Durchführung des erfindungsgemäßen Verfahrens zur Überwachung der Integrität, das bevorzugt dazu ausgebildet und/oder eigerichtet ist,
- für wenigstens eine Komponente eines zu überwachenden cyber-physischen Systems, die im laufenden Betrieb Bewegungen absolviert, mittels wenigstens eines bildgebendes Verfahrens Bilddaten zu erfassen und/oder übergeben zu bekommen,
- unter Rückgriff auf die Bilddaten Betriebsdaten des Systems zu schätzen, wobei die geschätzten Betriebsdaten insbesondere geschätzte Prozessdaten und/oder geschätzte Konfigurationsdaten und/oder geschätzte Fertigungsdaten umfassen,
- tatsächliche Betriebsdaten des cyber-physischen Systems, die insbesondere tatsächliche Prozessdaten und/oder tatsächliche Konfigurationsdaten und/oder tatsächliche Fertigungsdaten umfassen, zu ermitteln und/oder übergeben zu bekommen,
- die unter Rückgriff auf die Bilddaten geschätzten Betriebsdaten und die tatsächlichen Betriebsdaten zu vergleichen.

Die Kern der vorliegenden Erfindung besteht mit anderen Worten darin, die Konsistenz zwischen den Betriebsdaten, die beispielsweise Sensor- und/oder Aktuatordaten etwa wenigstens einer Steuerung eines überwachten cyber-physischen Systems umfassen oder dadurch gegeben sind, und dem über wenigstens ein bildgebendes Verfahren beobachteten tatsächlichen Betrieb eines solchen zu prüfen. Es kann dadurch die Konsistenz zwischen tatsächlichen Betriebsdaten und der bildgebend geschätzten physikalischen Realität überprüft werden. Dafür werden erfindungsgemäß reale, physische Aktionen des cyber-physischen Systems durch wenigsten ein bildgebendes Verfahren beobachtet und auf Basis des beobachteten Betriebes, konkret auf Basis der erhaltenen Bilddaten, die beispielsweise in Form einer Videosequenz mit einem Bewegungsablauf einer Komponente vorliegen können, werden zugehörige Betriebsdaten geschätzt. Die geschätzten Daten, die praktisch Plausibilisierungsdaten darstellen, werden mit den tatsächlichen Betriebsdaten verglichen. Ist eine Abweichung - ggf. um mehr als ein vorgegebenes, zulässiges Maß - gegeben, kann auf ein Problem bezüglich der Integrität geschlossen werden, beispielsweise von einer Manipulation seitens Dritter ausgegangen werden.

Die erfindungsgemäß erfolgende Beobachtung über eines oder mehrere bildgebende Verfahren ist unabhängig von einem Steuerungs- und Überwachungssystem.

Durch den erfindungsgemäß vorgesehenen Vergleich zwischen bildgebend geschätzten und tatsächlichen Betriebsdaten kann ein besonders hoher Grad an Zuverlässigkeit bei der Überwachung der Integrität erreicht werden. Fremdzugriffe und eine damit einhergehende Beeinträchtigung der Integrität können zuverlässig erkannt werden. Es sind weiterhin auch Manipulationen an der analogen Ansteuerung beispielsweise eines Aktuators oder an Sensoren des cyber-physischen Systems erkennbar, z.B. eine Manipulation einer Ansteuerelektronik. Dadurch wird eine neue Qualität der Integritätsüberwachung erreicht.

Die Integrität kann mit vergleichsweise geringem Aufwand basierend auf einer Vielzahl von Datenquellen überwacht werden, sodass insgesamt die Zuverlässigkeit zunimmt. Für den Erhalt von Bilddaten können geeignete Bildsensoren, beispielsweise Videokameras verwendet werden, die in bestehenden Anlagen ggf. ohnehin bereits vorhanden sein können. Eine Konsistenzprüfung kann auf Basis von leicht zu ermittelnden bzw. ggf. aufgrund einer ohnehin aus anderen Gründen vorgesehenen Videoüberwachung vorhandenen Bilddaten erfolgen. Vorteilhaft ist zudem, dass eine erfindungsgemäße Überwachung in hochautomatisierten Fertigungen anwendbar ist, wo sich eine manuelle Prüfung und Überwachung als schwierig erweist. Es können herkömmliche Videokameras verwendet werden, die ein zweidimensionales Bild erfassen, ebenso wie Videokameras, die eine Tiefeninformation erfassen, insbesondere sogenannte Time-of-Flight-Kameras. Es können jedoch auch andere bildgebende Verfahren wie z.B. Ultraschall, Röntgen, Magnetresonanztomographie, Radar oder Lidar alternativ oder zusätzlich verwendet werden.

Durch die Erfindung wird es auch möglich zu überprüfen, ob der mittels eines bildgebenden Verfahrens beobachtete Betrieb mit Konfigurationsdaten und/oder Projektierungsdaten und/oder Fertigungsdaten konsistent ist.

Es ist auch eine Positiv-Bestätigung der Integrität ohne großen Aufwand möglich. Dies ist beispielsweise im Rahmen einer Abnahmephase durch einen Kunden besonders vorteilhaft. Diesem kann dann mit vergleichsweise geringem Aufwand die Integrität des Systems demonstriert werden.

Unter einem cyber-physischen System ist insbesondere ein Verbund informatischer/softwaretechnischer Komponenten mit mechanischen und elektronischen Teilen zu verstehen. Ein zu überwachendes, insbesondere industrielles cyber-physisches System kann beispielsweise eine beliebige Art von Automatisierungssystem, ein Kraftwerk, ein Energieverteilnetz, ein Umspannwerk, eine Fertigungslinie für Werkstücke oder Maschinen, eine Raffinerie, eine Pipeline, eine Kläranlage, ein Verkehrsleitsystem, ein medizinisches Gerät o. ä. implementieren. Beispiele für cyber-physische Systeme in Form von Automatisierungssysteme umfassen auch: eine Industrieanlage; eine Fertigungshalle; ein Umspannwerk; ein Roboter; ein Flurförderfahrzeug; ein autonomes Transportsystem; eine Werkzeugmaschine; eine Fräse; eine Presse; eine prozesstechnische Anlage; und einen 3D Drucker.

Bei den Bilddaten, die für die wenigstens eine Komponente erfasst bzw. übergeben werden, handelt es sich zweckmäßiger Weise um solche, welche einen Bewegungsablauf der wenigstens einen Komponente zeigen oder repräsentieren oder von welchen ein solcher ableitbar ist. Bilddaten können beispielsweise in Form von Bilddaten vorliegen, die die Bewegung eines Roboters oder Transportbandes oder 3D-Druckers (oder jeweils eines Teils eines solchen) zeigen, gegeben sein oder eine solche umfassen. Auch die voranschreitende Generierung eines herzustellenden Werkstücks, etwa mittels eines 3D-Druckers, kann eine Bewegung einer Komponente des zu überwachenden Systems darstellen, die dann durch Bilddaten repräsentiert werden bzw. von solchen ableitbar sein kann. Bilddaten können insbesondere in Form einer oder mehrerer Bildsequenzen und/oder in Form eines oder mehrerer Videos vorliegen. Die zeitliche Länge kann sich beispielsweise im Bereich von 1 Millisekunde bis 10 Sekunden bewegen, beispielsweise 1ms, 10ms, 100ms, 1s oder 10s betragen. Es ist möglich, mehrere Bildsequenzen unterschiedlicher Länge zu erfassen und auszuwerten.

Das erfindungsgemäße Integritätsüberwachungs-System kann in bevorzugter Weiterbildung dazu ausgebildet und/oder eigerichtet sein, basierend auf dem Vergleich die Integrität des zu überwachenden cyber-physischen Systems zu beurteilen.

Weiterhin kann es beispielsweise eine Recheneinrichtung, etwa einen (Industrie-)PC umfassen oder durch eine Recheneinrichtung gegeben sein, auf der bevorzugt eine geeignete Software installiert ist. Das erfindungsgemäße Integritätsüberwachungs-System umfasst besonders bevorzugt wenigstens einen Prozessor und/oder wenigstens einen Programmspeicher, der bzw. die eingerichtet ist bzw. sind, um die vorstehenden Schritte auszuführen.

Es kann eine Bilddaten-Analyse-Einheit umfassen, die ausgebildet und/oder eingerichtet ist, um aus den Bilddaten Betriebsdaten zu schätzen.

Es kann ferner alternativ oder zusätzlich eine Betriebsdaten-erfassungseinheit aufweisen, die ausgebildet und/oder eingerichtet ist, um die tatsächlichen Betriebsdaten zu empfangen und/oder abzugreifen. Ist eine solche Einheit vorhanden, weist sie bevorzugt wenigstens eine Kommunikationsschnittstelle auf, über welche sie mit wenigstens einer Komponente, insbesondere Steuerung eines zu überwachenden cyber-physikalischen Systems kommunikativ verbunden werden kann, um von diesem Betriebsdaten übergeben zu bekommen und/oder abzugreifen. In einer Variante können Betriebsdaten rückwirkungsfrei abgegriffen werden, z.B. unter Nutzung wenigstens einer Datendiode oder wenigstens einer sogenannten Data Capturing Unit (DCU). Dies hat den Vorteil, dass das cyber-physische System, etwa Automatisierungssystem durch das erfindungsgemäße Integritätsüberwachungs-System nicht beeinflusst werden kann.

Die eine oder die mehreren Einheiten, die das erfindungsgemäße System in vorteilhafter Ausbildung umfasst, stellen insbesondere funktionale Einheiten dar, die beispielsweise durch verschiedene Software-Komponenten auch auf einer gemeinsamen Hardware implementiert sein können.

Das erfindungsgemäße Verfahren kann vor Ort (lokal) für ein zu überwachendes System durchgeführt werden.

Alternativ oder zusätzlich kann für dieses bzw. im Rahmen dieses auch eine (herkömmlichen oder Edge-)Cloud genutzt werden. Die erfindungsgemäße Integritäts-Überwachung kann auch als Dienst in einer Cloud angeboten bzw. in einer Cloud durchgeführt werden. Insbesondere zumindest die Schätzung von Betriebsdaten auf Basis bereitgestellter/erfasster Bilddaten und/oder der Vergleich der geschätzten Betriebsdaten mit tatsächlichen Betriebsdaten können als Dienst in einer Cloud angeboten bzw. in einer Cloud durchgeführt werden. Dies ist besonders vorteilhaft, wenn auch wenigstens eine Komponente eines zu überwachenden cyber-physischen Systems, etwa wenigstens ein Roboter und/oder wenigstens eine Fertigungsmaschine ebenfalls aus der Cloud angesteuert werden (Cloud-Robotics). Eine Cloud bietet auch den Vorteil, dass Betriebsdaten anderen im Rahmen eines über die Cloud angebotenen Services, insbesondere einem Integritätsüberwachungs-Service, einfach zur Verfügung gestellt werden können.

Die Beurteilung der Integrität des zu überwachenden cyber-physischen Systems schließt bevorzugt die Beurteilung ein, ob sich zumindest ein Teil des zu überwachenden cyber-physischen Systems in einem manipulierten Zustand befindet. Für den Fall, dass ein manipulierter Zustand erkannt wird, wird bevorzugt ein Alarm ausgegeben und/oder das cyber-physische System in einen sicheren Zustand überführt.

Weiterhin ist es möglich, dass für den Fall, dass ein manipulierter Zustand erkannt wird, die Konfiguration des überwachten cyber-physischen Systems geändert wird, insbesondere derart, dass wenigstens eine Komponente dieses, die als manipuliert gilt, deaktiviert wird. Beispielsweise können einer oder mehrere Sensoren und/oder Aktuatoren, die nicht plausibel sind und daher als manipuliert gelten, deaktiviert werden. Diese Ausführungsform bietet den Vorteil, dass mehrere redundante Komponenten, insbesondere Sensoren und/oder Aktuatoren in einem cyber-physischen System vorgesehen werden können. Es werden dann im laufenden Betrieb diejenigen deaktiviert, die nicht (mehr) plausibel sind. Insbesondere wenn unterschiedliche technische Realisierungen von Komponenten, etwa Sensoren und/oder Aktuatoren (z.B. unterschiedliche Betriebssysteme, unterschiedliche Bibliotheken, unterschiedliche Hardware-Basis, etc.) verwendet werden, kann dadurch die Angriffshürde, um ein cyber-physisches System, beispielsweise Automatisierungssystem erfolgreich zu manipulieren, weiter erhöht werden.

Tatsächliche Betriebsdaten können insbesondere Überwachungsdaten und/oder Steuerdaten und/oder Prozessabbilddaten eines industriellen Automatisierungs- und Steuerungssystems sein.

Tatsächliche Betriebsdaten können insbesondere durch ein in wenigstens einer Steuerung vorhandenes Prozessabbild (der Eingänge und/oder der Ausgänge) gegeben sein bzw. ein solches umfassen. Als die tatsächlichen Betriebsdaten werden besonders bevorzugt solche Betriebsdaten bereitgestellt und/oder ermittelt, die von wenigstens einer Steuerung des Systems stammen.

"Tatsächlich" bedeutet im Zusammenhang mit den Betriebsdaten insbesondere, dass dieser Teil eines Prozessabbildes oder das bzw. ein Prozessabbild sind, mit dem die Steuerung(en) des cyber-physischen Systems arbeiten. Es handelt sich insbesondere um Information, die in einem Automatisierungssystem verwendet wird, die im Falle einer Manipulation aber nicht der physikalischen Realität entsprechen muss.

Entsprechend zeichnet sich eine weitere Ausführungsform dadurch aus, dass als die tatsächlichen Betriebsdaten solche Betriebsdaten bereitgestellt und/oder ermittelt werden, mit denen wenigstens eine Steuerung des zu überwachenden cyber-physische Systems arbeitet.

Eine Steuerung kann beispielsweise durch eine speicherprogrammierbare Steuerung (SPS) oder auch eine Steuerungs- und Überwachungseinrichtung gegeben sein. Eine Überwachungseinrichtung kann z.B. ein Schutzschalter eines Energieverteilnetzes sein. Eine Steuerung bzw. ein Steuerungs- und Überwachungseinrichtung kann auch in Form eines SCADA-Systems vorliegen. SCADA steht dabei für Supervisory Control and Data Acquisition.

Die tatsächlichen Betriebsdaten können tatsächliche Messdaten und/oder tatsächliche Aktuatordaten umfassen. Sie können zum Beispiel in Form von Messdaten, die von einem oder mehreren Sensoren gemessen und insbesondere an eine Steuerung übergeben wurden, und/oder in Form von für Aktuatoren bestimmte, insbesondere von einer Steuerung ermittelte Steuerdaten gegeben sein.

Besonders bevorzugt werden die tatsächlichen Betriebsdaten manipulationsgeschützt ermittelt. Dazu werden die Betriebsdaten insbesondere kryptographisch geschützt, z.B. durch eine kryptographische Prüfsumme (digitale Signatur, Nachrichtenauthentisierungscode) oder über eine kryptographisch geschützte Kommunikationsverbindung (z.B. IPsec, TLS) übertragen, oder sie werden als Transaktion durch einen Block einer Blockkette (Blockchain, Distributed Ledger) bestätigt.

Alternativ oder zusätzlich können die tatsächlichen Betriebsdaten auch mittels OPC UA und/oder einem anderen Kommunikationsprotokoll von wenigstens einer Komponente des zu überwachenden cyber-physischen Systems, etwa einer oder mehreren Steuerungen dieses, abgefragt werden.

Auch ist es möglich, dass zurückliegende tatsächliche Betriebsdaten beispielsweise von einem Historian-Server abgefragt werden. So kann beispielsweise nachträglich, d.h. nach erfolgter Produktion, die Integrität eines Produktionsvorgangs mittels aufgezeichneter Bilddaten geprüft werden.

Die geschätzten Betriebsdaten können beispielsweise ein geschätztes Prozessabbild umfassen bzw. durch ein solches gegeben sein. Die geschätzten Betriebsdaten können geschätzte Messdaten und/oder geschätzten Aktuatordaten umfassen oder durch solche gegeben sein.

Die geschätzten Betriebsdaten können auch eine Position, und/oder eine Bewegungsgeschwindigkeit, und/oder eine Bewegungsrichtung, und/oder eine Beschleunigung beispielswiese eines 3D-Druckkopfes umfassen. Ebenso können sie die Ausgabe eines 3D-Materials, z.B. von einer Druckdüse abgegebener flüssiger Kunststoff umfassen. Bei einem bzw. für einen Roboter eins cyber-physischen Systems können die geschätzten Betriebsdaten die Bewegung (Geschwindigkeit, Drehgeschwindigkeit, räumliche Position) des Roboters, z.B. eines Achsgelenks oder einer Greifvorrichtung umfassen.

Eine weitere vorteilhafte Ausführungsform zeichnet sich dadurch aus, dass auf Basis der Bilddaten eine Beschleunigung und/oder Geschwindigkeit wenigstens einer von der wenigstens einen Komponente ausgeführten Bewegung geschätzt wird, und die wenigstens eine geschätzte Beschleunigung und/oder Geschwindigkeit mit Geschwindigkeits- und/oder Beschleunigungs-Messdaten, die bevorzugt über wenigstens einen Geschwindigkeits- und/oder Beschleunigungssensor des überwachten cyber-physischen Systems erfasst wurden, verglichen wird. Das erfindungsgemäße Integritätsüberwachungs-System kann entsprechend dazu ausgebildet und/oder eingerichtet sein, auf Basis der Bilddaten eine Beschleunigung und/oder Geschwindigkeit wenigstens einer von der wenigstens einen Komponente ausgeführten Bewegung zu schätzen, und die wenigstens eine geschätzte Beschleunigung und/oder Geschwindigkeit mit Geschwindigkeits- und/oder Beschleunigungs- Messdaten, die bevorzugt über wenigstens einen Geschwindigkeits- und/oder Beschleunigungssensor des überwachten Systems erfasst wurden, zu vergleichen.

Beispielsweise kann über die Bilddaten einer Roboterbewegung die Geschwindigkeit und/oder Beschleunigung der Bewegung geschätzt werden. Dann kann die Konsistenz zwischen diesen bildgebend geschätzten Prozessdaten und tatsächlichen Prozessdaten, z.B. der registrierten Geschwindigkeit durch einen entsprechenden Sensor an einem Roboterarm durch Vergleich geprüft werden. Bei Abweichung wird bevorzugt ein Alarmsignal bereitgestellt. Das cyber-physische System kann dann auch automatisch oder nach Bediener-Zustimmung heruntergefahren oder in einen unkritischen Betriebszustand versetzt werden.

Auch kann vorgesehen sein, dass das wenigstens eine bildgebende Verfahren zum Erhalt der Bilddaten die Verwendung einer oder mehrerer Kameras einschließt, und/oder die Verwendung von RADAR- und/oder LIDAR- und/oder Ultraschall- und/oder Computertomographie- (CT-) und/oder Magnetresonanztomographie- (MRT-) und/oder Röntgen-Technik. Grundsätzlich gilt, dass jedes Verfahren zum Einsatz kommen kann, welches Bilddaten über das Verhalten einer Komponente eines cyber-physischen Systems im laufenden Betrieb liefern kann. Dies betrifft sowohl zweidimensionale wie auch dreidimensionale, d.h. räumliche, Bilddaten. Es versteht sich, dass nur eine Art von bildgebendem Verfahren zur Anwendung kommen kann, oder auch zwei oder mehr verschiedene bildgebende Verfahren in Kombination zum Einsatz kommen, etwa eine oder mehrere klassische Videokameras mit MRT- und/oder Röntgen-basierter Bilderfassung kombiniert werden können.

Das erfindungsgemäße Integritätsüberwachungs-System weist in vorteilhafter Weiterbildung wenigstens einen Bilderfassungs-Sensor und/oder wenigstens eine Bilderfassungs-Einrichtung auf, der und/oder die dazu ausgebildet und/oder eingerichtet ist, die Bilddaten, welche den Bewegungsablauf der wenigstens einen Komponente des zu überwachenden cyber-physischen Systems repräsentieren oder von welchen ein solcher ableitbar ist, zu erfassen.

Bei wenigstens einem Bilderfassungs-Sensor bzw. wenigstens einer Bilderfassungs-Einrichtung kann es sich um eine Videokamera handeln. Alternativ oder zusätzlich kann wenigstens ein Bilderfassungs-Sensor bzw. wenigstens eine Bilderfassungs-Einrichtung vorgesehen sein, der bzw. die für eine RADAR- und/oder LIDAR- und/oder Ultraschall- und/oder Computertomographie- (CT-) und/oder Magnetresonanztomographie-(MRT-) und/oder Röntgen-basierte Bilderfassung ausgebildet und/oder eingerichtet ist.

Eine weitere ganz besonders bevorzugte Ausführungsform zeichnet sich ferner dadurch aus, dass eine künstliche Intelligenz bereitgesellt wird, und die Schätzung der Betriebsdaten aus den Bilddaten unter Verwendung der künstlichen Intelligenz erfolgt. Das erfindungsgemäße Integritätsüberwachungs-System kann entsprechend eine künstliche Intelligenz umfassen, und dazu ausgebildet und/oder eingerichtet sein, die Schätzung der Betriebsdaten aus den Bilddaten unter Verwendung der künstlichen Intelligenz durchzuführen.

Eine künstliche Intelligenz kann insbesondere wenigstens ein neuronales Netz umfassen oder durch wenigstens ein neuronales Netz gegeben sein. Eine angelernte/trainierte künstliche Intelligenz kann entsprechend wenigstens ein angelerntes/trainiertes neuronales Netz umfassen oder durch wenigstens ein angelerntes/trainiertes neuronales Netz gegeben sein.

Eine künstliche Intelligenz kann in einer Cloud bereitgestellt werden.

Bevorzugt handelt es sich bei der künstlichen Intelligenz um eine solche, die angelernt wird und/oder wurde.

Ein weiterer Gegenstand der Erfindung ist ein Verfahren zum Anlernen einer künstlichen Intelligenz, bei dem
- eine künstliche Intelligenz bereitgestellt wird,
- Bilddaten, welche einen Bewegungsablauf wenigstens einer Komponente eines cyber-physischen Systems repräsentieren oder von welchen ein solcher ableitbar ist, zusammen mit zu den Bilddaten gehörige Betriebsdaten, die während des laufenden Betriebs des die wenigstens eine Komponente umfassenden cyber-physischen Systems oder eines baugleichen oder ähnlichen cyber-physischen Systems in einem manipulationsfreien Zustand und bevorzugt unter typischen Bedingungen erfasst wurden, bereitgestellt werden,
- die Bilddaten und die Betriebsdaten der künstlichen Intelligenz zugeführt werden und die künstliche Intelligenz auf Basis dieser angelernt wird.

Mit anderen Worten wird angelernt, bei welchen Bilddaten welche Betriebsdaten bei einem gegebenen cyber-physischen System gemessen werden.

Darüber hinaus betrifft die Erfindung eine angelernte künstliche Intelligenz, die unter Durchführung dieses Verfahrens erhalten wurde.

Die künstliche Intelligenz, die im Rahmen einer bevorzugter Ausführungsform des erfindungsgemäßen Verfahrens zur Überwachung der Integrität eines insbesondere industriellen cyber-physischen Systems bereitgestellt wird, ist bevorzugt durch eine solche angelernte künstliche Intelligenz gegeben.

Kommt eine bevorzugt angelernte künstliche Intelligenz zum Einsatz, kann insbesondere mittels dieser (u.a.) aus Bilddaten eine Beschleunigung und/oder Geschwindigkeit wenigstens einer von der wenigstens einen Komponente ausgeführten Bewegung geschätzt werden.

Ein weiterer Gegenstand der Erfindung ist ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin zeigt jeweils in rein schematischer Darstellung
- FIG 1: Komponenten eines cyber-physischen Systems und ein Ausführungsbeispiel eines erfindungsgemäßen Integritätsüberwachungs-System;
- FIG 2: ein Flussdiagramm eines erfindungsgemäßen Verfahrens zum Anlernen einer künstlichen Intelligenz; und
- FIG 3: ein Flussdiagramm eines erfindungsgemäßen Verfahrens zur Überwachung der Integrität eines cyber-physischen Systems.

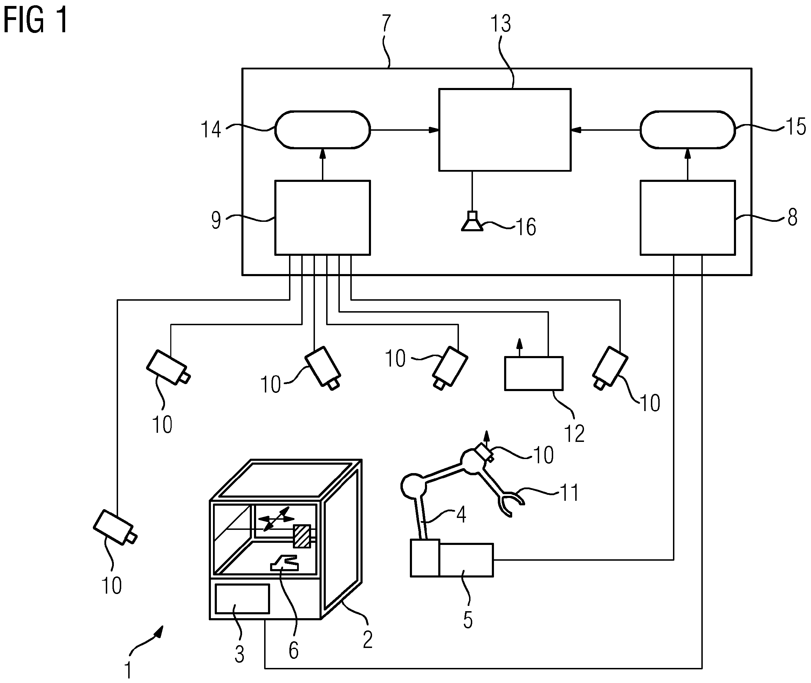

Die FIG 1 zeigt in rein schematischer Darstellung einige Komponenten eines cyber-physischen Systems, welches vorliegend durch ein industrielles Automatisierungssystem 1 gegeben ist.

Von dem Automatisierungssystem 1 sind konkret ein 3D-Drucker 2 mit beweglichem Druckkopf und zugehöriger Steuerung 3 und ein Roboter 4 mit zugehöriger Steuerung 5 gezeigt. Es sei angemerkt, dass es sich bei dem dargestellten und/oder weiteren Robotern um einen konventionellen Roboter, ein autonomes Robotersystem oder auch einen Cloud-gesteuerten Roboter handeln kann. Ein Cloud-gesteuerter Roboter umfasst dann bevorzugt eine 5G-Mobilfunkschnittstelle.

Die Komponenten 2-5 stehen zusammen mit einer Vielzahl weiterer Komponenten des Automatisierungssystem in einer nicht dargestellten Halle. Rein beispielhaft seien für Komponenten, die ein Automatisierungssystem alternativ oder zusätzlich umfassen kann, wenigstens eine Fräsmaschine, wenigstens ein Laserschneidgerät oder ähnliches genannt.

Das Automatisierungssystem kommt bei dem hier beschriebenen Ausführungsbeispiel zur Herstellung von Produkten zum Einsatz. In dem 3D-Drucker 2 ist ein Produkt 6 in einem unfertigen Zwischenzustand rein schematisch dargestellt. Dieses wird, nachdem der 3D-Druckprozess abgeschlossen ist, mittels des Roboters 4 an eine weitere, nicht erkennbare Verarbeitungsstation des Automatisierungssystems übergeben. Ein 3D-Druckverfahren kann auch als additives Fertigungsverfahren bezeichnet werden.

In der FIG 1 ist ferner ein Ausführungsbeispiel eines erfindungsgemäßen Integritätsüberwachungs-Systems 7 - ebenfalls in rein schematischer Darstellung - gezeigt. Dieses umfasst eine Betriebsdaten-Erfassungseinheit 8, die ausgebildet und/oder eingerichtet ist, um tatsächlichen Betriebsdaten zu empfangen und/oder abzugreifen. Die Betriebsdaten-Erfassungseinheit 8 ist dazu mit der Steuerung 3 des 3D-Druckers 2 und der Steuerung 5 des Roboters 4 verbunden und dazu eingerichtet, im laufenden Betrieb des Automatisierungssystems das in den beiden Steuerungen 3, 5 vorhandene Prozessabbild kontinuierlich bzw. periodisch, etwa alle paar Millisekunden oder alle 10 oder 100 Mikrosekunden abzugreifen. Das Abgreifen kann zeitsynchronisiert erfolgen, d.h. dass das Abgreifen zu mit einer Zeitquelle synchronisierten Zeitpunkten erfolgt. Die Zeitsynchronisation kann z.B. mittels einem PTP oder NTP Protokoll, über ein Satellitennavigationssystem (GPS, Galileo, Beidou, Glonass) oder einen Zeitzeichensender wie DCF77 erfolgen.

Die Betriebsdaten-Erfassungseinheit 8 weist zwei Kommunikationsschnittstellen auf, über welche sie jeweils mit einer der beiden Steuerungen 3, 5 kommunikativ verbunden ist, um von diesem im laufenden Betrieb Betriebsdaten übergeben zu bekommen und/oder abzugreifen.

Das Integritätsüberwachungs-Systems 7 umfasst ferner ein Bilddaten-Analyse-Einheit 9, welche zur bildbasierten Analyse des Verhaltens des Automatisierungssystems 1 dient. Die Bilddaten-Analyse-Einheit 9 ist mit insgesamt sechs Videokameras 10 verbunden, welche in der das Automatisierungssystems 1 umgebenden Halle, konkret jeweils in der Nähe des 3D-Druckers 2 bzw. Roboters 4 angeordnet sind. Die Kameras 10 können beispielsweise jeweils im Deckenbereich und/oder an einer Wand und/oder auf einem Ständer montiert sein oder auch direkt an einer Komponente, etwa einer Maschine angebracht sein. So ist eine der sechs Kameras 10 auf dem Arm des Roboters 4 angeordnet, um den Bereich um dessen Greifer 11 beobachten zu können. Diese Kamera 10 ist drahtlos mit einem Access Point (AP) verbunden, der wiederum kabelgebunden an die Bilddaten-Analyse-Einheit 9 angeschlossen ist. Die weiteren fünf Kameras 10 sind jeweils via Kabel mit der Bilddaten-Analyse-Einheit 9 verbunden. Die Analyse-Einheit 9 weist Kommunikationsschnittstellen auf, über welche sie mit den Kameras 10 verbunden ist, um von diesen aufgezeichnete Bilddaten zu erhalten.

Über die sechs Videokameras werden im laufenden Betrieb Bewegungen des 3D-Druckers 2 bzw. Komponenten dieses, das Voranschreiten des Druckprozesses des jeweiligen Produktes 6 und Bewegungen des Roboters 4 beobachtet. In an sich bekannter Weise werden hierdurch Bildsequenzen in Form von Videos erhalten, welche Bewegungsabläufen des 3D-Druckers 2, Produktes 6 bzw. Roboters 4 repräsentieren bzw. von welchen solche ableitbar sind. Die erfassten Bild- bzw. Videodaten werden kontinuierlich an die Bilddaten-Analyse-Einheit 9, die mit allen Kameras 10 verbunden ist, übergeben bzw. von dieser erfasst.

Es sei angemerkt, dass bei dem hier beschriebenen Ausführungsbeispiel die sechs Kameras 10 Teil des dargestellten Integritätsüberwachungs-Systems 7 sind. Alternativ dazu kann einer oder können mehrere Bildsensoren etwa in Form von Videokameras aber auch separate Komponenten eines solchen Integritätsüberwachungs-Systems 7 darstellen. Es kann beispielsweise durchaus sein, dass ein oder mehrere Bildsensoren Teil eines zu überwachenden cyber-physischen Systems sind, etwa, weil sie dort bereits aus einem anderen Grunde vorgesehen sind, und mit einem erfindungsgemäßen Integritätsüberwachungs-Systems nur kabellos und/oder kabelgebunden verbunden werden, welches hierfür zweckmäßiger Weise eine oder mehrere geeignete Schnittstellen aufweist.

Die Bilddaten-Analyse-Einheit 9 des dargestellten Integritätsüberwachungs-Systems 7 ist dazu ausgebildet und/oder eingerichtet, auf Basis von Bilddaten, die mittels der sechs Kameras 10 erfasst werden bzw. wurden, Betriebsdaten des Automatisierungssystems 1 zu schätzen. Bei dem hier beschriebenen Ausführungsbeispiel ist die Bilddaten-Analyse-Einheit 9 konkret dazu ausgebildet und oder eingerichtet, Betriebsdaten in Form eines Prozessabbildes zu schätzen. Die geschätzten Betriebsdaten können eine Position, eine Bewegungsgeschwindigkeit, eine Bewegungsrichtung, eine Beschleunigung eines 3D-Druckkopfes umfassen. Ebenso können sie die Ausgabe eines 3D-Materials, z.B. von einer Druckdüse abgegebener flüssiger Kunststoff umfassen. Bei einem Robotor können die geschätzten Betriebsdaten die Bewegung (Geschwindigkeit, Drehgeschwindigkeit, räumliche Position) des Roboters, z.B. eines Achsgelenks oder einer Greifvorrichtung umfassen.

Hierfür umfasst das Integritätsüberwachungs-Systems 7 eine angelernte künstliche Intelligenz in Form eines angelernten neuronalen Netzes.

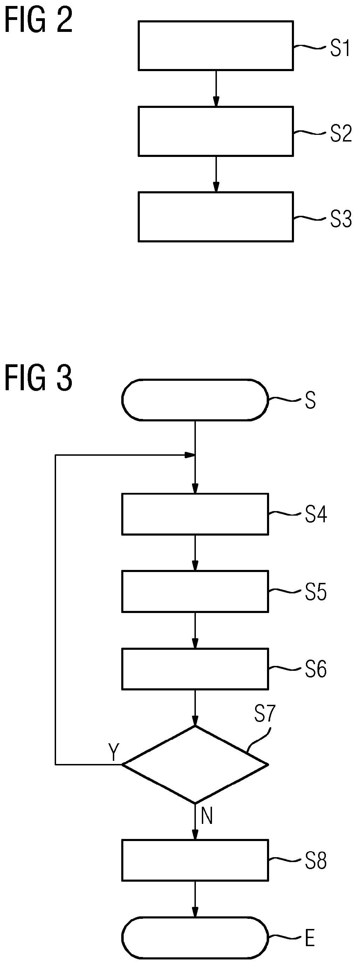

Dieses wurde erhalten, indem ein neuronales Netz in un-angelernter/untrainierter Form bereitgestellt wurde (Schritt S1, siehe FIG 2) und diesem Bilddaten, welche Bewegungsabläufe des 3D-Druckers 2, in der Herstellung befindlicher Produkte 6 und des Roboters 4 des Automatisierungssystems 1 repräsentieren zusammen mit zu den Bilddaten gehörigen tatsächlichen Betriebsdaten, die während des laufenden Betriebs des Automatisierungssystems 1 in einem manipulationsfreien Zustand und unter typischen Bedingungen erfasst wurden, bereitgestellt wurden (Schritt S2). Konkret wurden von den Komponenten 2, 4, 6 im laufenden Betrieb und im manipulationsfreien Zustand von den sechs Kameras 10 Videos aufgenommen, gleichzeitig das reale, tatsächliche Prozessabbild der Steuerungen 3, 5 als tatsächliche Betriebsdaten periodisch erfasst und diese Betriebsdaten und die Bilddaten wurde dem neuronalen Netz zugeführt und dieses wurde entsprechend angelernt (Schritt S3).

Dieses unter Bezugnahme auf FIG 2 beschriebene Verfahren stellt ein Ausführungsbeispiel eines erfindungsgemäßen Verfahrens zum Anlernen/Trainieren einer künstlichen Intelligenz dar.

Das auf diese Weise angelernte neuronale Netz kann, wenn ihm anschließend im angelernten Zustand Bilddaten zugeführt werden, zugehörige Betriebsdaten schätzen.

U.a. kann mittels des angelernten neuronalen Netzes auf Basis der bzw. aus den Bilddaten, die mit den Kameras 10 erfasst werden bzw. wurden, eine Beschleunigung und/oder Geschwindigkeit wenigstens einer von wenigstens einer Komponente des Automatisierungssystems 1 ausgeführten Bewegung geschätzt werden. Vorliegend kann u.a. eine Geschwindigkeit und/oder Beschleunigung des Armes des Roboters 4 geschätzte werden. Auch kann eine Position und Bewegung eines 3D-Druckkopfes oder eine von einem 3D-Druckkopf abgegebene Werkstoffmenge geschätzt werden.

Das Integritätsüberwachungs-Systems 7 umfasst weiterhin eine Konsistenzprüfungs-Einheit 13, die dazu ausgebildet und eingerichtet ist, geschätzte Betriebsdaten 14, die von der Bilddaten-Analyse-Einheit 9 bereitgestellt werden, und tatsächliche Betriebsdaten 15, die über die Betriebsdaten-Erfassungseinheit 8 abgegriffen bzw. ausgelesen werden, miteinander zu vergleichen.

Es kann u.a. eine geschätzte Beschleunigung und/oder Geschwindigkeit des Roboterarms mit Geschwindigkeits- und/oder Beschleunigungs-Messdaten, die bevorzugt über wenigstens einen Geschwindigkeits- und/oder Beschleunigungssensor des überwachten Systems erfasst wurden, und Teil des tatsächlichen Prozessabbildes 15 sind, verglichen werden, wofür die Konsistenzprüfungs-Einheit 13 entsprechend ausgebildet und eingerichtet ist.

Es sei angemerkt, dass bei dem hier beschriebenen Ausführungsbeispiel das Integritätsüberwachungs-System 7 einen Industrie-PC umfasst, auf dem sämtliche der vorbeschriebenen Einheiten 8, 9, 13 implementiert sind, jeweils durch geeignete Programmbausteine. Der Industrie-PC umfasst in an sich bekannter Weise wenigstens einen Prozessor und einen Programmspeicher, die entsprechend eingerichtet sind.

Unter Verwendung des Integritätsüberwachungs-System 7 wird ein Ausführungsbeispiel des erfindungsgemäßen Verfahrens zur Überwachung der Integrität durchgeführt, um die Integrität des Automatisierungssystems 1 im laufenden Betrieb zu überwachen. Die zugehörigen Schritte können dem Flussdiagram aus FIG 3 entnommen werden.

Konkret wird das Verfahren gestartet (S, siehe FIG 3).

In einem Schritt S4 werden für wenigstens eine Komponente 2, 4, 6 des cyber-physischen Systems 1, die im laufenden Betrieb Bewegungen absolviert, mittels wenigstens eines bildgebendes Verfahrens Bilddaten, welche einen Bewegungsablauf der wenigstens einen Komponente 2, 4, 6, repräsentieren oder von welchen ein solcher ableitbar ist, erfass. Vorliegend werden über die Kameras 10 Bilddaten in Form von Videos des 3D-Druckers 2, damit hergestellter Produkte 6 und des Roboters 4 erfasst.

Unter Rückgriff auf die erfassten Bilddaten und unter Nutzung des angelernten neuronalen Netzes werden von der Bilddaten-Analyse-Einheit 9 Betriebsdaten 14 des cyber-physischen Systems 1 geschätzt (Schritt S5), wobei die geschätzten Betriebsdaten 14 geschätzte Prozessdaten und/oder geschätzte Konfigurationsdaten und/oder geschätzte Fertigungsdaten umfassen.

Es werden mit der Betriebsdaten-Erfassungseinheit 8 ferner tatsächliche Betriebsdaten 15 des cyber-physischen Systems 1, die tatsächliche Prozessdaten und/oder tatsächliche Konfigurationsdaten und/oder tatsächliche Fertigungsdaten umfassen, ermittelt (Schritt S6), indem diese von den Steuerungen 3, 5 angegriffen werden. Vorliegend werden von diesen tatsächliche Betriebsdaten 15 abgegriffen bzw. ausgelesen, die tatsächlichen Messdaten und/oder tatsächlichen Aktuatordaten umfassen.

Die unter Rückgriff auf die Bilddaten geschätzten Betriebsdaten 14 und die tatsächlichen Betriebsdaten 15 werden der Konsistenzprüfungs-Einheit 13 übergeben und von dieser miteinander verglichen (S7).

Basierend auf dem Vergleich wird die Integrität des zu überwachenden cyber-physischen Systems 1 beurteilt. Die Beurteilung der Integrität des zu überwachenden cyber-physischen Systems 1 schließt dabei die Beurteilung ein, ob sich zumindest ein Teil des cyber-physischen Systems 1 in einem manipulierten Zustand befindet.

Liefert der Vergleich S7 als Ergebnis, dass die geschätzten und tatsächlichen Betriebsdaten 14, 15 - ggf. bis auf eine zulässiges Maß an Abweichung - übereinstimmen, wird die Konsistenz der geschätzten und der tatsächlichen Betriebsdaten 14, 15 und somit die Integrität des Automatisierungssystems 1 bejaht, was in der FIG 3 durch einen mit dem Bezugszeichen Y versehenen Pfeil angedeutet ist und es kann erneut mit dem Ermitteln/Bereitstellen von Bilddaten S5 für eine neue Iteration des Verfahrens fortgefahren werden.

Liefert der Vergleich S8 hingegen als Ergebnis, dass die geschätzten und die tatsächlichen Betriebsdaten 14, 15 - ggf. um mehr als ein zulässiges Maß - voneinander abweichen, wird bevorzugt ein Alarm ausgegeben S8 und die Überprüfung kann beendet (E, siehe FIG 3) und das Automatisierungssystem in einen sicheren, unkritischen Zustand überführt werden.

In der FIG 1 ist die Ausgabe eines Alarmes bzw. eine hierfür ausgebildete, mit der Konsistenzprüfungs-Einheit 13 verbundene Alarm-Einheit mit dem Bezugszeichen 16 versehen. Bei einem Alarm kann es sich um einen akustischen Alarm insbesondere für Benutzer oder Betreiber vor Ort handeln. Auch ist es möglich, eine Alarm-SMS und/oder Alarm-E-Mail an einen Benutzer bzw. Betreiber zu sende.

Alternativ oder zusätzlich kann ein Alarmsignal an eine Safety-Steuerung ausgegeben werden, die das Automatisierungssystem 1 in einen eigensicheren Zustand (Nothalt) überführt.

Es ist auch möglich, ein Alarmsignal einer Stromversorgung bereitzustellen, so dass mit hoher Zuverlässigkeit und unabhängig etwa von einer Robotersteuerung 5 oder einem Safety-System ein Maschinenhalt erzwungen werden kann.

Es kann sein, dass für den Fall, dass ein manipulierter Zustand erkannt wird, die Konfiguration des überwachten cyber-physischen Systems 1 geändert wird, beispielsweise derart, dass wenigstens eine Komponente dieses, die als manipuliert gilt, deaktiviert wird. Beispielsweise kann der 3D-Drucker 2 oder der Robotor 4 mehrere redundante Sensoren zur Erfassung der tatsächlichen Betriebsdaten aufweisen (nicht in FIG 1 dargestellt). Es können dann diejenigen Sensoren deaktiviert werden, deren Messerte nicht konsistent mit den bildgebend geschätzten Prozessdaten sind. Es kann beispielsweise auch die Bewegungsgeschwindigkeit des 3D-Druckkopfes 2 reduziert werden, oder es kann die maximale Beschleunigung eines Roboterarms verringert werden.

Es sei angemerkt, dass ein erfindungsgemäßes Integritätsüberwachungs-System 7 mit allen seinen Einheiten 8, 9, 13 vor Ort (lokal) bei einem zu überwachenden Automatisierungssystem 1 angesiedelt sein, sich etwa in der gleichen Halle befinden kann, wie ein solches. Dies ist jedoch nicht zwingend erforderlich. Vielmehr kann insbesondere die Funktion des Schätzens von Betriebsdaten auf Basis von Bilddaten (S5) und/oder der Vergleich von geschätzten und tatsächlichen Betriebsdaten 14, 15 auch als Dienst in der Cloud angeboten werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Beispielsweise kann alternativ oder zusätzlich dazu, dass Bilddaten mittels Videokameras erfasst werden, dass wenigstens eine bildgebende Verfahren zum Erhalt der Bilddaten die Verwendung von RADAR- und/oder LIDAR- und/oder Ultraschall- und/oder Computertomographie- und/oder Magnetresonanztomographie- und/oder Röntgen-Technik umfassen.

## Patentansprüche

1. Verfahren zur Überwachung der Integrität eines insbesondere industriellen cyber-physischen Systems (1), bei dem
- für wenigstens eine Komponente (2, 4, 6) des cyber-physischen Systems (1), die im laufenden Betrieb Bewegungen absolviert, mittels wenigstens eines bildgebendes Verfahrens Bilddaten erfasst werden (S4),
- unter Rückgriff auf die erfassten Bilddaten Betriebsdaten (14) des cyber-physischen Systems (1) geschätzt werden (S5), wobei die geschätzten Betriebsdaten (14) insbesondere geschätzte Prozessdaten und/oder geschätzte Konfigurationsdaten und/oder geschätzte Fertigungsdaten umfassen,
- tatsächliche Betriebsdaten (15) des cyber-physischen Systems (1), die insbesondere tatsächliche Prozessdaten und/oder tatsächliche Konfigurationsdaten und/oder tatsächliche Fertigungsdaten umfassen, bereitgestellt und/oder ermittelt werden (S6),
- die unter Rückgriff auf die Bilddaten geschätzten Betriebsdaten (14) und die tatsächlichen Betriebsdaten (15) verglichen werden (S7), und
- basierend auf dem Vergleich die Integrität des zu überwachenden cyber-physischen Systems beurteilt wird.

2. Verfahren nach Anspruch 1,
**dadurch gekennzeichnet, dass** die Beurteilung der Integrität des zu überwachenden cyber-physischen Systems (1) die Beurteilung einschließt, ob sich zumindest ein Teil des cyber-physischen Systems (1) in einem manipulierten Zustand befindet, und für den Fall, dass ein manipulierter Zustand erkannt wird, bevorzugt ein Alarm ausgegeben (S8) und/oder das cyberphysikalische System (1) in einen sicheren Zustand überführt wird.

3. Verfahren nach Anspruch 2,
**dadurch gekennzeichnet, dass** für den Fall, dass ein manipulierter Zustand erkannt wird, die Konfiguration des überwachten cyber-physischen (1) Systems geändert wird, insbesondere derart, dass wenigstens eine Komponente (2, 4, 6) dieses, die als manipuliert gilt, deaktiviert wird.

4. Verfahren nach einem der vorhergehenden Ansprüche,
**dadurch gekennzeichnet, dass** als die tatsächlichen Betriebsdaten (15) solche Betriebsdaten bereitgestellt und/oder ermittelt werden, die von wenigstens einer Steuerung (3, 5) des Systems stammen, insbesondere Daten eines Prozessabbilds der Eingänge und/oder eines Prozessabbilds der Ausgänge wenigstens einer Steuerung (3, 5).

5. Verfahren nach einem der vorhergehenden Ansprüche,
**dadurch gekennzeichnet, dass** als die tatsächlichen Betriebsdaten (15) solche Betriebsdaten bereitgestellt und/oder ermittelt werden, mit denen wenigstens eine Steuerung (3, 5) Systems arbeitet.

6. Verfahren nach einem der vorhergehenden Ansprüche,
**dadurch gekennzeichnet, dass** die tatsächlichen Betriebsdaten (15) tatsächliche Messdaten und/oder tatsächliche Aktuatordaten umfassen, und/oder dass die geschätzten Betriebsdaten (14) geschätzte Messdaten und/oder geschätzten Aktuatordaten umfassen.

7. Verfahren nach einem der vorhergehenden Ansprüche,
**dadurch gekennzeichnet, dass** auf Basis der Bilddaten eine Beschleunigung und/oder Geschwindigkeit wenigstens einer von der wenigstens einen Komponente (2, 4, 6) ausgeführten Bewegung geschätzt wird, und die wenigstens eine geschätzte Beschleunigung und/oder Geschwindigkeit mit Geschwindigkeits- und/oder Beschleunigungs-Messdaten, die bevorzugt über wenigstens einen Geschwindigkeits- und/oder Beschleunigungssensor des überwachten cyber-physischen Systems (1) erfasst wurden, verglichen wird.

8. Verfahren nach einem der vorhergehenden Ansprüche,
**dadurch gekennzeichnet, dass** das wenigstens eine bildgebende Verfahren zum Erhalt der Bilddaten die Verwendung einer oder mehrerer Kameras (10) einschließt, und/oder die Verwendung von RADAR- und/oder LIDAR- und/oder Ultraschall- und/oder Computertomographie- und/oder Magnetresonanztomographie- und/oder Röntgen-Technik.

9. Verfahren nach einem der vorhergehenden Ansprüche,
**dadurch gekennzeichnet, dass** eine künstliche Intelligenz bevorzugt in einer Cloud bereitgesellt wird, und die Schätzung der Betriebsdaten aus den Bilddaten unter Verwendung der künstlichen Intelligenz erfolgt.

10. Verfahren nach Anspruch 9,
**dadurch gekennzeichnet, dass** die künstliche Intelligenz angelernt wird und/oder wurde, insbesondere unter Durchführung des Verfahrens gemäß Anspruch 11.

11. Verfahren zum Anlernen einer künstlichen Intelligenz, bei dem
- eine künstliche Intelligenz bevorzugt in einer Cloud bereitgestellt wird (S1),
- Bilddaten, welche einen Bewegungsablauf wenigstens einer Komponente (2, 4, 6) eines cyber-physischen Systems (1) repräsentieren oder von welchen ein solcher ableitbar ist, zusammen mit zu den Bilddaten gehörige Betriebsdaten, die während des laufenden Betriebs des die wenigstens eine Komponente (2, 4, 6) umfassenden cyber-physischen Systems (1) oder eines baugleichen oder ähnlichen cyber-physischen Systems in einem manipulationsfreien Zustand und bevorzugt unter typischen Bedingungen erfasst wurden, bereitgestellt werden (S2),
- die Bilddaten und die Betriebsdaten der künstlichen Intelligenz zugeführt werden und die künstliche Intelligenz auf Basis dieser angelernt wird (S3).

12. Angelernte künstliche Intelligenz, die unter Durchführung des Verfahrens gemäß Anspruch 11 erhalten wurde.

13. Integritätsüberwachungs-System (7) zur Durchführung des Verfahrens nach einem der Ansprüche 1 bis 10, das dazu ausgebildet und/oder eigerichtet ist,
- für wenigstens eine Komponente (2, 4, 6) eines zu überwachenden cyber-physischen Systems (1), die im laufenden Betrieb Bewegungen absolviert, mittels wenigstens eines bildgebendes Verfahrens Bilddaten zu erfassen und/oder übergeben zu bekommen,
- unter Rückgriff auf die Bilddaten Betriebsdaten (14) des cyber-physischen Systems (1) zu schätzen, wobei die geschätzten Betriebsdaten (14) insbesondere geschätzte Prozessdaten und/oder geschätzte Konfigurationsdaten und/oder geschätzte Fertigungsdaten umfassen,
- tatsächliche Betriebsdaten (15) des cyber-physischen Systems (1), die insbesondere tatsächliche Prozessdaten und/oder tatsächliche Konfigurationsdaten und/oder tatsächliche Fertigungsdaten umfassen, zu ermitteln und/oder übergeben zu bekommen,
- die unter Rückgriff auf die Bilddaten geschätzten Betriebsdaten (14) und die tatsächlichen Betriebsdaten (15) zu vergleichen.

14. Integritätsüberwachungs-System (7) nach Anspruch 13,
**dadurch gekennzeichnet, dass** das Integritätsüberwachungs-System (7) wenigstens einen Bildsensor (10) aufweist, der dazu ausgebildet und/oder eingerichtet ist, die Bilddaten, welche den Bewegungsablauf der wenigstens einen Komponente (2, 4, 6) des zu überwachenden cyber-physischen Systems (1) repräsentieren oder von welchen ein solcher ableitbar ist, zu erfassen.

15. Integritätsüberwachungs-System (7) nach Anspruch 13 oder 14,
**dadurch gekennzeichnet, dass** das Integritätsüberwachungs-System (7) dazu ausgebildet und/oder eingerichtet ist, auf Basis der Bilddaten eine Beschleunigung und/oder Geschwindigkeit wenigstens einer von der wenigstens einen Komponente (2, 4, 6) ausgeführten Bewegung zu schätzen, und die wenigstens eine geschätzte Beschleunigung und/oder Geschwindigkeit mit Geschwindigkeits- und/oder Beschleunigungs-Messdaten, die bevorzugt über wenigstens einen Geschwindigkeits- und/oder Beschleunigungssensor des überwachten cyber-physischen Systems (1) erfasst wurden, zu vergleichen.

16. Integritätsüberwachungs-System (7) nach einem der Ansprüche 13 bis 15,
**dadurch gekennzeichnet, dass** das Integritätsüberwachungs-System (7) eine künstliche Intelligenz umfasst, und dazu ausgebildet und/oder eingerichtet ist, die Schätzung der Betriebsdaten aus den Bilddaten unter Verwendung der künstlichen Intelligenz durchzuführen.

17. Integritätsüberwachungs-System (7) nach Anspruch 16,
**dadurch gekennzeichnet, dass** die künstliche Intelligenz eine angelernte künstliche Intelligenz, insbesondere eine solche gemäß Anspruch 11 ist.

18. Computerprogramm umfassend Programmcode-Mittel zur Durchführung des Verfahrens nach einem der Ansprüche 1 bis 11.

19. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 11 durchzuführen.
